# EUROPÄISCHE PATENTANMELDUNG

(11) **EP 0 686 810 A2**
(43) Veröffentlichungstag der Anmeldung: **13.12.1995**
(21) Anmeldenummer: 95108543.0
(22) Anmeldetag: 02.06.1995
(51) Int. Cl.: F23J 15/02, F23J 15/04, B01D 53/50

(54) **Verfahren zur Abscheidung von Feinstpartikeln aus Abgasen von nass mit Kalkstein entschwefelten Verbrennungsanlagen**

(30) Priorität: 07.06.1994 DE 4419669
(71) Anmelder: Noell-KRC Umwelttechnik GmbH, D-04435 Schkeuditz (DE)
(72) Erfinder: Knülle, Helmut, Dr., D-34121 Kassel (DE); von Turegg, Roger, D-50825 Köln (DE)
(74) Vertreter: Werner, Hans-Karsten, Dr.Dipl.-Chem.

(57) **Zusammenfassung**

Das Verfahren zur Abscheidung von Feinstpartikeln, insbesondere Feinststäuben und/oder sauren Aerosolen aus den Abgasen von naß mit Kalkstein entschwefelten Verbrennungsanlagen für schwefel- und/oder schadstoffreiche Brennstoffe besteht darin, daß die feinstpartikelhaltigen Gase vor oder nach der nassen Rauchgasentschwefelung über ein Gewebefilter geleitet werden, welches mit überschüssigen Mengen von Kalkhydrat und/oder Kalksteinmehl konditioniert ist.

## Beschreibung

Die Erfindung betrifft ein Verfahren zur Abscheidung von Feinstpartikeln, insbesondere Feinstäuben und/oder sauren Aerosolen aus den Abgasen von naß mit Kalkstein entschwefelten Verbrennungsanlagen für schwefel- und/oder schadstoffreiche Brennstoffe. Insbesondere betrifft das Verfahren die Abscheidung von sauren Aerosolen und/oder Feinststäuben, wie sie in Verbrennungsanlagen für schwefelreiches Schweröl oder in Müllverbrennungsanlagen anfallen und die naß mit Kalkstein entschwefelt werden.

Derartige nasse Rauchgasentschwefelungsanlagen arbeiten wirtschaftlich und mit sehr hohem Wirkungsgrad, jedoch weisen sie den Nachteil auf, daß sich bei der Verbrennung von schwefelreichen Brennstoffen wie Schweröl Aerosole von Schwefelsäure bilden, die durch die nasse Rauchgasentschwefelungsanlage hindurch in die gereinigten Abgase gelangen und sowohl in den nachgeschalteten Teilen der Rauchgasreinigung als auch in den Kaminen und in der Umwelt zu unerwünschten Folgereaktionen und Verunreinigungen führen können.

Das gleiche gilt für Feinststäube in den Abgasen von Müllverbrennungsanlagen, welche sowohl die vorgeschalteten und/oder nachgeschalteten Elektrofilter als auch nachgeschaltete Gewebefilter passieren und dadurch zu nicht annehmbaren Belastungen der Umwelt führen.

Chem.-Ing.-Tech. 60 (1988) Nr. 6, Seiten 448 bis 452 beschreibt die Entfernung von Staub durch Filter und die dabei zu beachtenden Parameter und Maßnahmen. Aus Seite 450, rechte Spalte, letzter Absatz und Seite 451, linke Spalte, erster Absatz ergibt sich, daß man versucht hat, den fehlenden Filterkuchen bei Feinstäuben durch Aufbringen einer Precoatschicht aus einem geeigneten Kalksteinmehl zu ersetzen. Es fehlen aber jegliche Hinweise auf die Korngröße und Menge des eingesetzten Kalksteinmehls. Zum Precoaten werden stets nur möglichst geringe Mengen an Material eingesetzt, um den Betriebsmittelverbrauch so gering wie möglich zu halten. Weiterhin führen unnötig dicke Schichten zu einem Druckabfall und damit zu unerwünschtem zusätzlichen Energieverbrauch. Es fehlt jeglicher Hinweis darauf, wie sich schwefelsäurehaltige Aerosole beim Kontakt mit Kalksteinmehl verhalten. Es war zumindest zu befürchten, daß diese Aerosole mit dem Kalksteinmehl als auch Kalkhydrat zu Calciumsulfat reagieren, welches zur Verbackung und Verklebung des Kalksteinmehls führen könnte.

Die Erfindung hat sich somit die Aufgabe gestellt, diese Feinstpartikel, insbesondere Feinstäube und/oder saure Aerosole aus solchen Abgasen abzuscheiden, wobei gefordert ist, daß dies zuverlässig, preiswert, wartungsarm und energiesparend erfolgen soll.

Es wurde jetzt gefunden, daß diese Aufgabe dadurch gelöst werden kann, daß die feinstpartikelhaltigen Gase vor oder nach der nassen Rauchgasentschwefelung über ein Gewebefilter geleitet werden, welches mit überschüssigen Mengen von Kalkhydrat und/oder Kalksteinmehl konditioniert ist. Durch diese Konditionierung der Gewebefilter ist es möglich, sowohl die sauren Aerosole von Schwefelsäure aus schwefelreichen Brennstoffen als auch Feinststäube zu entfernen, welche bisher sowohl die nasse Rauchgasentschwefelung mit Kalkstein als auch sonstige Abscheidesysteme passieren konnten.

Die Konditionierung mit Kalkhydrat und/oder Kalksteinmehl kann gewünschtenfalls noch dadurch optimiert werden, daß zusätzlich geringe Mengen anderer trockener Absorbentien zugesetzt werden, wie Aktivkohle, Zeolithe etc.

Derartige gemischte Absorbentien werden vorzugsweise nach der nassen Rauchgasentschwefelung eingesetzt. Die dabei entstehenden verbrauchten Absorbentien sind dann meist auch separat zu entsorgen.

Sofern die Konditionierung ausschließlich mit Kalkhydrat und/oder Kalksteinmehl erfolgt, können diese Absorbentien anschließend in die nasse Rauchgasentschwefelungsanlage geleitet werden, wo sie bei der nassen Rauchgasentschwefelung sinnvoll verwertet werden. Sofern das Absorbenz allein aus Kalksteinmehl besteht, kann sogar das gesamte für die nasse Rauchgasentschwefelungsanlage benötigte Kalksteinmehl zuvor dazu verwendet werden, das vor oder nach der nassen Rauchgasentschwefelungsanlage angeordnete Gewebefilter zu konditionieren.

Bei dem erfindungsgemäßen Verfahren ist stets darauf zu achten, daß die über das Gewebefilter geleiteten Gase Temperaturen oberhalb des Taupunktes aufweisen, da es anderenfalls zu Verklebungen und Verbackungen kommt.

An sich war auch zu erwarten, daß sowohl Kalksteinmehl als auch Kalkhydrat mit der Schwefelsäure der Aerosole zu Calciumsulfat reagiert, welches zur Verbackung und Verklebung des Kalksteinmehls führt. Tatsächlich liegen aber die Mengen an Schwefelsäure in den Aerosolen so niedrig, daß dieser Effekt nicht eintritt, zumal das Kalksteinmehl auf dem Gewebefilter erfindungsgemäß so reichlich bemessen und so rasch ausgetauscht werden kann, daß stets überschüssige Mengen vorliegen. Vorzugsweise beträgt der Überschuß das 20- bis 100-fache der zu bindenden Schwefelsäure.

Auch bei der Abscheidung von Feinststäuben an dem trockenen Kalkhydrat und/oder Kalksteinmehl kommt es nicht zu Verklebungen oder Verstopfungen der Filterschicht auf dem Gewebefilter, wenn die Mengen an Feinststäuben, bezogen auf die zur Konditionierung eingesetzten Mengen, sehr gering sind. Diese Schichten von Kalksteinmehl und/oder Kalkhydrat wirken als Filter für Feinststäube, so daß diese wirksam abgeschieden werden, obwohl auch die Korngröße des Kalksteinmehls und/oder Kalkhydrats wesentlich höher liegt als die Korngröße der Feinststaubpartikel.

Sofern dem Kalksteinmehl und/oder Calciumhydroxid noch weitere trockene Absorbentien wie Aktivkohle, Zeolithe etc. zugesetzt werden, können auch andere gasförmige Verunreinigungen wie Dioxine, Furane und Quecksilber aus den Abgasen entfernt werden. Dies ist besonders bedeutungsvoll bei der Reinigung von Abgasen von Müllverbrennungsanlagen.

Die Abscheidung der Feinstpartikel auf dem konditionierten Gewebefilter ist relativ unempfindlich gegen Lastwechsel. Die Schichten aus Kalkhydrat und/oder Kalksteinmehl lassen sich auch in Teillastbetriebe durch eine geeignete Abreinigungssteuerung aufrechterhalten. Dadurch wird gewährleistet, daß stets die Feinstpartikel abgeschieden werden.

Der Energiebedarf des erfindungsgemäßen Verfahrens setzt sich im wesentlichen zusammen aus gasseitigem Filterwiderstand und der Durchlufterzeugung für die Abreinigung der Filterelemente. Er ist verhältnismäßig gering und kann gegebenenfalls von vorhandenen Saugzuggebläsen bzw. der Drucklufterzeugung der Anlage aufgebracht werden.

Bei der Durchführung des erfindungsgemäßen Verfahrens nach der nassen Rauchgaswäsche ist es notwendig, durch Wärmeaustausch/Wärmeverschiebung die Temperatur auf mindestens 30°C über dem Wassertaupunkt aufzuheizen. Diese Aufheizung ist aber auch nötig, um die gereinigten Abgase problemlos in den Kamin leiten zu können.

Ansonsten wird beim erfindungsgemäßen Verfahren vorzugsweise bei niedrigen Temperaturen gearbeitet, da dies die Wirksamkeit der Abtretung der Feinstpartikel erhöht. Dies gilt sowohl für die Abscheidung von schwefelsäurehaltigen Aerosolen wie auch für die Abscheidung von Feinststäuben. Bei der zusätzlichen Verwendung von Aktivkohle ist darüber hinaus darauf zu achten, daß es nicht zur Entzündung der Aktivkohle kommt. Daher wird diese Variante des Verfahrens vorzugsweise nach der nassen Rauchgasentschwefelung durchgeführt.

Das erfindungsgemäße Verfahren gestattet es, den Aerosolabscheidegrad auf gleich oder größer 98 % zu bringen. Der Staubgehalt im Reingas nach dem Wäscher läßt sich erfindungsgemäß ohne weiteres unter 5 mg/m³ i.N.tr. halten.

Das erfindungsgemäße Verfahren hat eine hohe Anlagenverfügbarkeit zur Folge, da Wartungsarbeiten am Gewebefilter während des laufenden Kesselbetriebes durchgeführt werden können. Bei den erfindungsgemäßen Varianten mit Kalkhydrat und/oder Kalksteinmehl allein entstehen auch keinerlei Reststoffentsorgungsprobleme, da diese Konditionierungsmittel anschließend in der nassen Rauchgasentschwefelung zu Gips verarbeitet werden.

## Patentansprüche

1. Verfahren zur Abscheidung von Feinstpartikeln, insbesondere Feinststäuben und/oder sauren Aerosolen aus Abgasen von naß mit Kalkstein entschwefelten Verbrennungsanlagen für schwefel- und/oder schadstoffreiche Brennstoffe, dadurch gekennzeichnet, daß die feinststaub- und/oder aerosolhaltigen Gase vor oder nach der nassen Rauchgasentschwefelung über ein Gewebefilter geleitet werden, welches mit überschüssigen Mengen von Kalkhydrat und/oder Kalksteinmehl konditioniert ist.

2. Verfahren gemäß Anspruch 1, dadurch gekennzeichnet, daß das Kalkhydrat und/oder Kalksteinmehl anschließend in die nasse Rauchgasentschwefelungsanlage geleitet wird.

3. Verfahren gemäß Anspruch 1, dadurch gekennzeichnet, daß das Kalksteinmehl zusätzlich geringe Mengen anderer trockener Absorbentien enthält.
